# EUROPEAN PATENT SPECIFICATION

(11) **EP 4 601 097 B1**
(45) Date of publication and mention of the grant of the patent: **02.12.2026**
(21) Application number: 23883072.3
(22) Date of filing: 24.10.2023
(51) Int. Cl.: H01M 50/30, H01M 10/42, H01M 10/6563, H01M 50/367

(54) **BATTERY PACK**
BATTERIEPACK
BLOC-BATTERIE

(30) Priority: 26.10.2022 KR 20220139552
(43) Date of publication of application: 13.08.2025
(73) Proprietor: LG Energy Solution, Ltd., Seoul 07335 (KR)
(72) Inventor: LEE, Su Hang, Daejeon 34122 (KR); KIM, Yong Il, Daejeon 34122 (KR)
(74) Representative: Plasseraud IP
(86) International application number: PCT/KR2023/016589
(87) International publication number: WO 2024/090967

(56) References cited:
- CN-A- 114 079 118
- CN-A- 114 915 861
- CN-U- 216 982 302
- JP-A- 2021 106 142
- KR-A- 20170 090 261
- KR-A- 20220 056 024
- KR-A- 20220 119 988
- KR-A- 20220 131 834

## Description

### TECHNICAL FIELD

### CROSS-REFERENCE TO RELATED APPLICATION

The present application claims the benefit of the priority of Korean Patent Application No. 10-2022-0139552, filed on October 26, 2022.

### TECHNICAL FIELD

The present invention relates to a battery pack capable of discharging an internal gas.

### BACKGROUND ART

Secondary batteries capable of charging and discharging are suitable for use as built-in battery cells because the secondary batteries do not require replacement of battery cells, and as stability and capacity of secondary batteries are rapidly improved, the secondary batteries are applied to various devices.

For example, secondary batteries are not only widely used as energy sources for wireless mobile devices, which are small multi-functional products, or wearable devices worn on the human body, but also are used as an energy source for electric vehicles and hybrid electric vehicles, which are proposed as an alternative to existing gasoline vehicles and diesel vehicles that cause air pollution, or energy storage system (ESS).

Particularly, in order to use a secondary battery as a large-capacity and high-output energy source, a battery module including a plurality of battery cells or a battery pack including a plurality of the battery modules is being used. As described above, as the secondary battery is used as the energy source of large capacity and high output, the problem of securing safety of the secondary battery has become an important subject of interest.

According to the related art, in order to prevent the secondary battery from rapidly shortening its lifespan due to a temperature during long-term use, a cooling system has been designed based on a heat release rate and a reliable operating temperature according to usage environments of the secondary battery. However, when one battery cell provided in the battery module or battery pack exceeds a critical temperature due to abnormal heat generation, thermal runaway (TR) may occur, and thermal propagation (TP) to surrounding battery cells may occur. This may cause safety problems such as ignition.

In order to prevent an internal pressure of the battery pack from excessively increasing due to a large amount of gas generated when the battery cell is ignited, the battery pack is provided with a venting part through which the gas is discharged to the outside. In addition, the venting part is generally provided with a filter that filters ignitable particles or sparks to prevent flames from being discharged to the outside of the battery pack.

However, if the ignition of the battery cell continues, there is a risk that the filter is blocked by a large amount of particles to prevent smooth gas ejection. A passive filter cleaning device for a signal acquisition unit in for battery packs is disclosed in CN 114 079 118 A.

### DISCLOSURE OF THE INVENTION

### TECHNICAL PROBLEM

The invention is defined by claim 1. An object of the present invention for solving the above problems is to provide a battery pack in which a scraper that prevents foreign substances accumulated on a filter from moving is reciprocated due to a flow of a gas to prevent the filter from being blocked.

### TECHNICAL SOLUTION

A battery pack according to an embodiment of the present invention includes: a housing; at least one battery module accommodated in the housing; a venting part provided in the housing to discharge a gas generated in the battery module; a filter disposed in front of the venting part in a flow direction of the gas; a scraper configured to remove foreign substances accumulated on the filter; and a driving part operating by the flow of the gas to reciprocate the scraper.

The driving part may be configured to allow the scraper to move in a length direction, a width direction, or a height direction of the battery pack.

A long hole extending parallel to the moving direction of the scraper may be defined in the filter.

The battery pack may further include a venting passage disposed within the housing to guide the gas generated in the battery module to the venting part.

The housing may include: an inner housing configured to accommodate the plurality of battery modules; and an outer housing configured to surround the inner housing and provided with the venting part. The venting passage may be provided between the inner housing and the outer housing.

The driving part may include: a fan configured to rotate by the flow of the gas; and a conversion mechanism configured to convert rotational force of the fan into moving force of the scraper.

The scraper may move in a direction parallel to a rotation axis of the fan.

The conversion mechanism may include: a rotor configured to rotate around a rotation axis perpendicular to the rotation axis of the fan; and an arm configured to connect the rotor to the scraper.

The conversion mechanism may further include a gear part configured to transmit the rotational force of the fan into the rotational force of the rotor.

One end of the arm may be rotatably connected at an eccentric position with respect to the rotation axis of the rotor, and the other end of the arm may be rotatably connected to the scraper.

A first protrusion may protrude from the rotor at an eccentric position with respect to the rotation axis of the rotor, a second protrusion may protrude from the scraper, and the arm may include: a first guide groove into which the first protrusion is inserted and which extends in a longitudinal direction of the arm; and a second guide groove into which the second protrusion is inserted and which extends in the longitudinal direction of the arm.

The scraper may move in a direction perpendicular to each of the rotation axis of the fan and the rotation axis of the rotor.

The battery pack may further include a guide part configured to guide the movement of the scraper.

The scraper may include: a connection part connected to the driving part; a main body provided with a cleaning member protruding toward the filter; and an extension part configured to connect the connection part to the main body and extending parallel to the moving direction of the scraper so as to be in contact with the guide part.

The scraper may include: a connection part connected to the driving part and extending parallel to the moving direction of the scraper so as to be in contact with the guide part; and a main body connected to the connection part and provided with a cleaning member protruding toward the filter.

### ADVANTAGEOUS EFFECTS

According to the preferred embodiment of the present invention, the scraper may be reciprocated by the driving part operating by the flow of the gas. As a result, the foreign substances accumulated on the filter may be removed in response to the generation of the gas, and the gas may be smoothly exhausted by passing through the filter.

In addition, there may be the advantage that the filter moves without consuming the additional energy, and also, the filter automatically moves when the gas is generated in the battery module due to the fire, etc.

In addition, since the number of rotations of the fan provided in the driving part is proportional to the flow rate of the gas, the moving speed of the scraper may increase as the amount of gas generated from the battery module increases. As a result, even if the amount of gas and foreign substances generated from the battery module increases, the foreign substances accumulated on the filter may be removed more quickly in proportion to the increase.

In addition, the effects that are obvious to those skilled in the art may be predicted from the configurations according to the embodiment of the present invention.

### BRIEF DESCRIPTION OF THE DRAWINGS

The following drawings attached in this specification illustrate a preferred embodiment of the present invention. The present invention should not be construed as being limited to only the drawings.
FIG. 1 is a schematic cross-sectional view illustrating the inside of a battery pack according to an embodiment of the present invention.
FIG. 2 is a schematic view illustrating a driving part and a scraper according to an embodiment of the present invention.
FIG. 3 is a schematic view illustrating a driving part and a scraper according to another embodiment of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

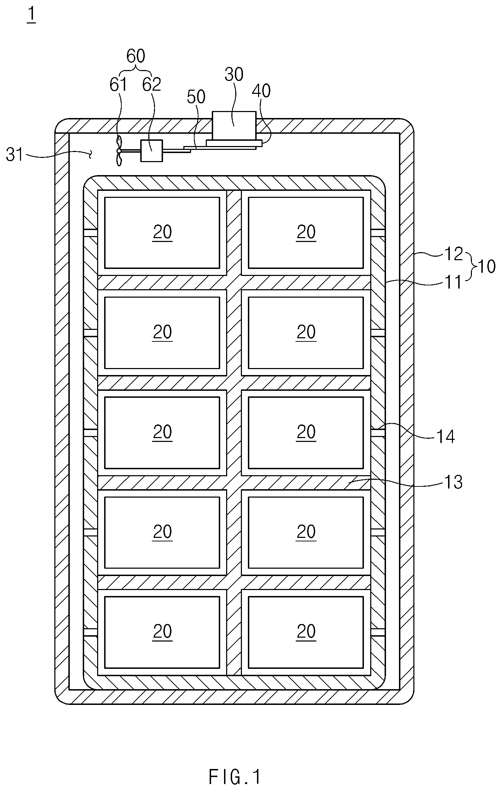

FIG. 1 is a schematic cross-sectional view illustrating the inside of a battery pack according to an embodiment of the present invention.

A battery pack 1 according to an embodiment of the present invention may include a housing 10 and at least one, preferably a plurality of battery modules 20 accommodated in the housing 10.

In more detail, the housing 10 may include an inner housing 11 accommodating at least one battery module 20 and an outer housing 12 surrounding the inner housing 11.

For example, the outer housing 12 may include a lower plate, an outer circumferential wall, and an upper plate, and the inner housing 11 may include an inner circumferential wall connected to the lower plate and upper plate of the outer housing 12. However, this embodiment is not limited thereto.

A partition wall 13 may be provided inside the inner housing 11. The partition wall 13 may divide an internal space of the inner housing 11 into a plurality of chambers. A battery module 20 may be disposed in each chamber.

The partition wall 13 may include a first partition wall and a second partition wall, which intersect each other and cross the internal space of the inner housing 11. For example, as illustrated in FIG. 1, the partition wall 13 may include a single first partition wall extending parallel to a length of the battery pack 1 and four second partition wall extending parallel to the width of the battery pack 1. The number of each of the first and second partition walls may vary depending on the number and arrangement of the battery modules 20 accommodated in the inner housing 11.

The outer housing 12 may surround the inner housing 11. The outer housing 12 may define an outer appearance of the battery pack 1. A venting passage 31, which will be described later, may be provided between the outer housing 12 and the inner housing 11.

The battery module 20 may be provided in at least one, preferably in plurality.

Each battery module 20 may include a module case and a plurality of battery cells (not shown) accommodated in the module case. Since the battery module 20 is a well-known structure, detailed description thereof will be omitted.

The plurality of battery modules 20 may be arranged in a predetermined arrangement within the housing 10. In more detail, the plurality of battery modules 20 may be respectively disposed in the plurality of chambers partitioned by the partition walls 13 within the inner housing 11. Thus, when thermal runaway or resulting fire occurs in one battery module 20, flame or a gas may be prevented from being transferred to other surrounding battery modules 20. In addition, thermal propagation (TP) between the plurality of battery modules 20 may be prevented.

The battery pack 1 may include a venting part 30 provided in the housing 10 to discharge a gas generated from the battery module 20.

The venting part 30 may be provided in the outer housing 12. The venting part 30 may be provided on a circumferential surface of the housing 10, and more specifically, on a circumferential surface of the outer housing 12.

The venting part 30 may be configured to discharge the gas generated from at least one of the plurality of battery modules 20 to the outside of the housing 10. The venting part 30 may allow the inside and the outside of the housing 10 to communicate with each other. The configuration of the venting part 30 is not limited. For example, the venting part 30 may include a passage or hole through which the gas passes.

The venting part 30 may discharge the gas caused by the fire or thermal runaway from the battery module 20 to the outside to prevent an internal pressure of the housing 10 from excessively increasing and prevent a structure of the housing 10 from collapsing.

The battery pack 1 may further include a venting passage 31 that is disposed within the housing 10 to guide the gas generated from the battery module 20 to the venting part 30.

For example, the venting passage 31 may be provided between the inner housing 11 and the outer housing 12. In more detail, the venting passage 31 may be provided between an outer surface of the inner housing 11 and an inner surface of the outer housing 12.

A plurality of venting holes 14 communicating with the venting passage 31 may be defined in the inner housing 11. Each venting hole 14 may allow the chamber in which each battery module 20 is placed and the venting passage 31 to communicate with each other. Thus, when the gas is generated due to the fire or thermal runaway in one battery module 20, the gas may flow into the venting passage 31 through the venting hole 14 of the chamber in which the one battery module 20 is disposed.

The battery pack 1 may include a filter 40 disposed in front of the venting part 30 in a flow direction of the gas, a scraper 50 that removes the foreign substances accumulated on the filter 40, and a driving part 60 that operates by the flow of the gas to allow the scraper 50 to be reciprocated.

The filter 40 may be disposed in front of the venting part 30 with respect to the flow direction of the gas. That is, the gas in the housing 10 may pass through the filter 40 and be discharged to the venting part 30. The filter 40 may be disposed in the venting passage 31. The filter 40 may be connected to the venting part 30, but is not limited thereto.

The configuration of the filter 40 is not limited. For example, the filter 40 may include at least one of a porous mesh, a porous membrane, or a grill.

The filter 40 may filter ignitable particles or sparks contained in the gas. Thus, the flame may be prevented from being discharged to the outside of the battery pack 1 through the venting part 30.

However, if the gas is generated from the battery module 20 for a long time, there is a risk that the filter 40 is blocked by particles filtered through the filter 40. Thus, in order to prevent this concern, the scraper 50 may remove the foreign substances accumulated at the inside of the filter 40.

In more detail, the scraper 50 may be reciprocated by the driving part 60 to scrape and remove the foreign substances accumulated on the inside of the filter 40. Thus, the driving part 60 may operate by the flow of the gas to be discharged to the venting part 30. That is, the reciprocation movement of the scraper 50 may be achieved by the flow of the gas without inputting additional energy.

The driving part 60 may be connected to the scraper 50. The driving part 60 may reciprocate the scraper 50 in a longitudinal or width direction of the filter 40. In more detail, the driving part 60 may allow the scraper 50 to move in a length direction, width direction, or height direction of the battery pack 1.

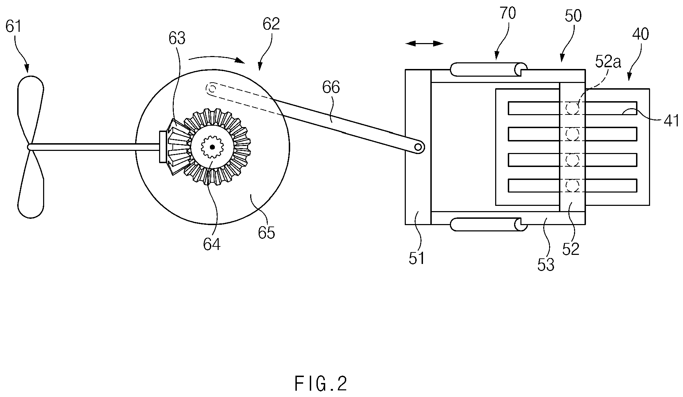

FIG. 2 is a schematic view illustrating the driving part and the scraper according to an embodiment of the present invention.

Instead of actively operation, the driving part 60 may operate passively by the flow of the gas. That is, the driving part 60 may move the scraper 50 by the flow of the gas. As a result, the scraper 50 may move without additional energy consumption. In addition, there is an advantage that the scraper 50 does not move in normal times, but when the gas is generated in the battery module 20 due to the fire or the like, the scraper 50 may be automatically reciprocated.

In this embodiment, the scraper 50 may move in a horizontal direction. In more detail, the scraper 50 may move in the direction of the length or width of the battery pack 1. In more detail, the scraper 50 may move in a direction parallel to a rotation axis of a fan 61.

The driving part 60 may include a fan 61 that rotates by the flow of the gas, and a conversion mechanism 62 that converts rotational force of the fan 61 into moving force of the scraper 50.

The fan 61 may be disposed within the venting passage 31. The fan 61 may be disposed to rotate by the flow of the gas in the venting passage 31.

The conversion mechanism 62 may connect the fan 61 to the scraper 50. The conversion mechanism 62 may convert the rotational force of the fan 61 into the moving force of the scraper 50.

For example, the conversion mechanism 62 may be a crank mechanism. In more detail, the conversion mechanism 62 may include a rotor 65 rotating around a rotation axis perpendicular to the rotation axis of the fan 61 and an arm 66 connecting the rotor 65 to the scraper 50. The conversion mechanism 62 may further include gear parts 63 and 64 that transmit the rotational force of the fan 61 into the rotational force of the rotor 65.

The gear parts 63 and 64 may include a first gear 63 connected to the fan 61 and a second gear 64 engaged with the first gear 63 and connected to the rotor 65. Rotation axes of the first gear 63 and the second gear 64 may be perpendicular to each other. Each of the first gear 63 and the second gear 64 may be a bevel gear.

The first gear 63 may rotate together with the fan 61, and the second gear 64 may rotate together with the rotor 65. However, it is not limited thereto, and the gear parts 63 and 64 may further include additional gears.

The rotor 65 may rotate by the rotational force of the fan 61 transmitted through the gear parts 63 and 64. The configuration of the rotor 65 is not limited. As an example, the rotor 65 may have a disk shape as illustrated in FIG. 2. As another example, the rotor 65 may have a cam shape.

One end of the arm 66 may be connected to an eccentric position with respect to the rotation axis of the rotor 65. Both ends of the arm 66 may be rotatably connected to the rotor 65 and the scraper 50, respectively. For example, one end of the arm 66 may be hingedly connected to the rotor 65, and the other end may be hingedly connected to the scraper 50.

Thus, the arm 66 may push or pull the scraper 50 according to the rotation of the rotor 65, and the scraper 50 may be reciprocated.

As a result, when the flow of the gas occurs, the fan 61 may rotate, and the scraper 50 may be reciprocated to periodically remove the foreign substances accumulated on the filter 40 from the inside of the filter 40.

In addition, since the rotation speed of the fan 61 is proportional to a flow rate of the gas, as the amount of gas generated from the battery module 20 increases, a moving speed of the scraper 50 may increase. As a result, even if the amount of gas generated from the battery module 20 increases, the filter 40 may be prevented from being completely blocked.

The battery pack 1 may further include a guide part 70 that guides the movement of the scraper 50. The guide part 70 may support the scraper 50.

The guide part 70 may be provided on an inner surface of the housing 10, more specifically, the outer housing 12. However, this embodiment is not limited thereto.

The guide part 70 may restrict the scraper 50 in directions other than the moving direction of the scraper 50. For example, when the driving part 60 moves the scraper 50 in a left and right direction, the guide part 70 may restrict the scraper 50 in vertical and forward and backward directions.

As a result, the movement of the scraper 50 may be reliably guided, and the scraper 50 may be supported to be reciprocated inside the filter 40.

A long hole 41 extending parallel to the moving direction of the scraper 50 may be defined in the filter 40. In the case of this embodiment, the long hole 41 defined in the filter 40 may be long in the horizontal direction, that is, in the direction of the length or width of the battery pack 1.

Thus, the foreign substances accumulated around the long hole 41 may be effectively removed by the scraper 50.

The scraper 50 may include a connection part 51 connected to the driving part 60 and a main body 52 provided with a cleaning member 52a protruding toward the filter 40.

The connection part 51 may be connected to the conversion mechanism 62, more specifically to the arm 66. As described above, the arm 66 may be rotatably connected to the connection part 51.

The main body 52 may be provided to be elongated in a direction perpendicular to the moving direction of the scraper 50. For example, the scraper 50 may move in the horizontal direction, and the main body 52 may be provided to be elongated in the vertical direction. A length of main body 52 may be longer than that of the filter 40 in a longitudinal direction. Thus, the foreign matter accumulated on the filter 40 may be completely removed by the reciprocating movement of the main body 52.

The main body 52 may be provided with a cleaning member 52a protruding toward the filter 40. The cleaning member 52a may be in contact with the filter 40 to scrape the foreign substances accumulated on the filter 40. A structure or material of the cleaning member 52a is not limited. For example, the cleaning member 52a may be provided as a brush or a rigid body.

The scraper 50 may further include an extension part 53 connecting the connection part 51 to the main body 52. The extension part 53 may be connected to at least one end of the main body 52.

The extension part 53 may be disposed so as not to overlap the filter 40. For example, a pair of extension parts 53 may be provided that overlap upper and lower sides of the filter 40, respectively. This is because, as described above, a length of the main body 52 is longer than that of the filter 40 in the longitudinal direction.

The extension part 53 may extend in a direction parallel to the moving direction of the scraper 50. In addition, the extension part 53 may be in contact with the guide part 70. Thus, the moving direction of the scraper 50 may be limited to the longitudinal direction of the extension part 53 by the guide part 70.

However, it is not limited thereto, and the scraper 50 may not include the extension part 53, and thus, the connection part 51 and the main body 52 may be directly connected to each other. In this case, the connection part 51 may extend in a direction parallel to the moving direction of the scraper 50 and may be in contact with the guide part 70. That is, the connection part 51 may instead perform the role of the extension part 53.

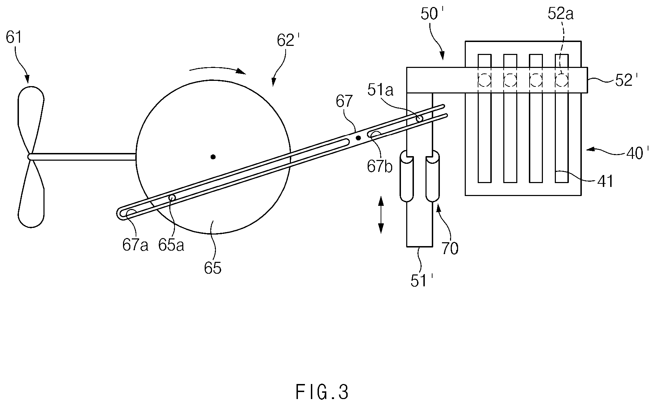

FIG. 3 is a schematic view illustrating a driving part and a scraper according to another embodiment of the present invention.

Hereinafter, contents duplicated with the previously described contents will be cited, and described with a focus on the differences.

In this embodiment, a scraper 50' may move in a vertical direction. In more detail, the scraper 50' may move in a height direction of a battery pack 1. In more detail, the scraper 50' may move in a direction perpendicular to each of a rotation axis of a fan 61 and a rotation axis of the rotor 65.

A conversion mechanism 62' according to this embodiment may include an arm 67 connecting a rotor 65 to the scraper 50'.

A first protrusion 65a may protrude from the rotor 65, and a second protrusion 51a may protrude from the scraper 50'. The first protrusion 65a may be disposed at an eccentric position with respect to the rotation axis of the rotor 65. The arm 67 may have a first guide groove 67a into which the first protrusion 65a is inserted and a second guide groove 67b into which the second protrusion 51a is inserted. The first guide groove 67a and the second guide groove 67b may be defined to be elongated in a longitudinal direction of the arm 67.

The first guide groove 67a and the second guide groove 67b may be defined to be penetrated as illustrated in FIG. 3. However, it is not limited thereto, and the first guide groove 67a and the second guide groove 67b may be defined in the arm 67 at a predetermined depth.

Thus, as the rotor 65 rotates, the first protrusion 65a may move within the first guide groove 67a, and in conjunction with the movement of the first protrusion 65a, the scraper 50' may be reciprocated so that the second protrusion 51a moves within the second guide groove 67b.

In addition, one point of the arm 67 may be rotatably fixed. For example, the one point may be disposed between the first guide groove 67a and the second guide groove 67b on the arm 67. As another example, the point may be one end of the arm 67, which is adjacent to the first guide groove 67a.

Thus, as the rotor 65 rotates, an angle of the arm 67 may vary with respect to the one point, and the other end of the arm 67 adjacent to the second guide groove 67b may repeatedly ascend and descend. That is, the scraper 50' may be reciprocated vertically.

The guide part 70 may restrict the scraper 50' in directions other than the moving direction of the scraper 50'. For example, when the driving part 60 moves the scraper 50' in the vertical direction, the guide part 70 may restrict the scraper 50' in a left and right direction and forward and backward direction.

As a result, the movement of the scraper 50' may be reliably guided, and the scraper 50' may be supported to be reciprocated inside the filter 40.

A long hole 41 extending parallel to the moving direction of the scraper 50' may be defined in the filter 40'. In this embodiment, the long hole 41 defined in the filter 40' may be long in the vertical direction, that is, in a height direction of the battery pack 1.

The scraper 50' may include a connection part 51' connected to the driving part 60 and a main body 52' provided with a cleaning member 52a protruding toward the filter 40'.

The connection part 51 may be connected to the conversion mechanism 62', more specifically to the arm 67. As described above, a second protrusion 51a may be disposed on the connection part 51', and the second protrusion 51a may be inserted into the second guide groove 67b of the arm 67.

The main body 52' may be provided to be elongated in a direction perpendicular to the moving direction of the scraper 50'. For example, the scraper 50' may move in the vertical direction, and the main body 52' may be provided to be elongated in a horizontal direction. A length of body 52' may be longer than that of the filter 40' in a longitudinal direction. Thus, foreign substances accumulated on the filter 40' may be completely removed by the reciprocating movement of the main body 52'.

The connection part 51' may extend in a direction parallel to the moving direction of the scraper 50'. In addition, the connection part 51' may be in contact with the guide part 70. Thus, the moving direction of the scraper 50' may be limited to the longitudinal direction of the connection part 51' by the guide part 70.

The above-disclosed subject matter is to be considered illustrative, and not restrictive. The invention is defined by the claims.

### [Description of the Symbols]

| | | | |
|---|---|---|---|
| 1: | Battery pack | 10: | Housing |
| 11: | Inner housing | 12: | Outer housing |
| 13: | Partition wall | 14: | Venting hole |
| 20: | Battery module | 30: | Venting part |
| 40: | Filter | 50: | Scraper |
| 51: | Connection part | 52: | Main body |
| 52a: | Cleaning member | 53: | Extension part |
| 60: | Driving part | 61: | Fan |
| 62: | Conversion mechanism | 65: | Rotor |
| 66: | Arm | 70: | Guide part |

## Claims

1. A battery pack (1) comprising:
a housing (10);
at least one battery module (20) accommodated in the housing (10);
a venting part (30) provided in the housing (10) to discharge a gas generated in the battery module (20) due to a fire or a thermal runaway in the battery module (20);
a filter (40) disposed in front of the venting part (30) in a flow direction of the gas;
a scraper (50) configured to remove foreign substances accumulated on the filter (40); and
a driving part (60) operating by the flow of the gas to reciprocate the scraper (50).

2. The battery pack (1) of claim 1, wherein the driving part (60) is configured to allow the scraper (50) to move in a length direction, a width direction, or a height direction of the battery pack (1).

3. The battery pack (1) of claim 1, wherein a long hole (41) extending parallel to the moving direction of the scraper (50) is defined in the filter (40), the long hole (41) being long in the direction of the length or width of the battery pack (1).

4. The battery pack (1) of claim 1, further comprising a venting passage (31) disposed within the housing (10) to guide the gas generated in at least one battery module (20) to the venting part (30).

5. The battery pack (1) of claim 4, wherein the housing (10) comprises:
an inner housing (11) configured to accommodate the at least one battery module (20) ; and
an outer housing (12) configured to surround the inner housing (11) and provided with the venting part (30),
wherein the venting passage (31) is provided between the inner housing (11) and the outer housing (12).

6. The battery pack (1) of claim 1, wherein the driving part (60) comprises:
a fan (61) configured to rotate by the flow of the gas; and
a conversion mechanism (62) configured to convert rotational force of the fan (61) into moving force of the scraper (50).

7. The battery pack (1) of claim 6, wherein the scraper (50) moves in a direction parallel to a rotation axis of the fan (61).

8. The battery pack (1) of claim 6, wherein the conversion mechanism (62) comprises:
a rotor (65) configured to rotate around a rotation axis perpendicular to the rotation axis of the fan (61); and
an arm (66, 67) configured to connect the rotor (65) to the scraper (50).

9. The battery pack (1) of claim 8, wherein the conversion mechanism (62) further comprises a gear part (63,64) configured to transmit the rotational force of the fan (61) into the rotational force of the rotor (65).

10. The battery pack (1) of claim 8, wherein one end of the arm (66) is rotatably connected at an eccentric position with respect to the rotation axis of the rotor (65), and
the other end of the arm (66) is rotatably connected to the scraper (50).

11. The battery pack (1) of claim 8, wherein a first protrusion (65a) protrudes from the rotor (65) at an eccentric position with respect to the rotation axis of the rotor (65),
a second protrusion (51a) protrudes from the scraper (50), and
the arm (67) comprises:
a first guide groove (67a) into which the first protrusion (65a) is inserted and which extends in a longitudinal direction of the arm (67); and
a second guide groove (67b) into which the second protrusion (51a) is inserted and which extends in the longitudinal direction of the arm (67).

12. The battery pack (1) of claim 8, wherein the scraper (50) moves in a direction perpendicular to each of the rotation axis of the fan (61) and the rotation axis of the rotor (65).

13. The battery pack (1) of claim 1, further comprising a guide part (70) configured to guide the movement of the scraper (50).

14. The battery pack (1) of claim 13, wherein the scraper (50) comprises:
a connection part (51) connected to the driving part (60);
a main body (52) provided with a cleaning member (52a) protruding toward the filter (40); and
an extension part (53) configured to connect the connection part (51) to the main body (52) and extending parallel to the moving direction of the scraper (50) so as to be in contact with the guide part (70).

15. The battery pack (1) of claim 13, wherein the scraper (50) comprises:
a connection part (51) connected to the driving part (60) and extending parallel to the moving direction of the scraper (50) so as to be in contact with the guide part (70); and
a main body (52) connected to the connection part (51) and provided with a cleaning member (52a) protruding toward the filter (40).

## Patentansprüche

1. Batteriepack (1), umfassend:
ein Gehäuse (10);
mindestens ein Batteriemodul (20), das in dem Gehäuse (10) untergebracht ist;
ein Entgasungsteil (30), das im Gehäuse (10) vorgesehen ist, um ein Gas abzuführen, das in dem Batteriemodul (20) aufgrund eines Feuers oder eines thermischen Durchgehens im Batteriemodul (20) erzeugt wird;
einen Filter (40), der in einer Strömungsrichtung des Gases vor dem Entgasungsteil (30) angeordnet ist;
einen Abstreifer (50), der so konfiguriert ist, dass er auf dem Filter (40) angesammelte Fremdstoffe entfernt; und
ein Antriebsteil (60), das durch die Strömung des Gases arbeitet, um den Abstreifer (50) hin- und herzubewegen.

2. Batteriepack (1) nach Anspruch 1, wobei das Antriebsteil (60) so konfiguriert ist, dass es dem Abstreifer (50) ermöglicht, sich in einer Längsrichtung, einer Breitenrichtung oder einer Höhenrichtung des Batteriepacks (1) zu bewegen.

3. Batteriepack (1) nach Anspruch 1, wobei ein sich parallel zur Bewegungsrichtung des Abstreifers (50) erstreckendes Langloch (41) in dem Filter (40) definiert ist, wobei das Langloch (41) in Richtung der Länge oder Breite des Batteriepacks (1) lang ist.

4. Batteriepack (1) nach Anspruch 1, ferner umfassend einen Entgasungskanal (31), der innerhalb des Gehäuses (10) angeordnet ist, um das in mindestens einem Batteriemodul (20) erzeugte Gas zum Entgasungsteil (30) zu leiten.

5. Batteriepack (1) nach Anspruch 4, wobei das Gehäuse (10) Folgendes umfasst:
ein inneres Gehäuse (11), das so konfiguriert ist, dass es mindestens ein Batteriemodul (20) aufnimmt; und
ein äußeres Gehäuse (12), das so konfiguriert ist, dass es das innere Gehäuse (11) umgibt, und das mit dem Entgasungsteil (30) versehen ist,
wobei der Entgasungskanal (31) zwischen dem inneren Gehäuse (11) und dem äußeren Gehäuse (12) vorgesehen ist.

6. Batteriepack (1) nach Anspruch 1, wobei das Antriebsteil (60) Folgendes umfasst:
ein Gebläse (61), das so konfiguriert ist, dass es sich durch die Strömung des Gases dreht; und
einen Umwandlungsmechanismus (62), der so konfiguriert ist, dass er eine Rotationskraft des Gebläses (61) in eine Bewegungskraft des Abstreifers (50) umwandelt.

7. Batteriepack (1) nach Anspruch 6, wobei sich der Abstreifer (50) in einer Richtung parallel zu einer Rotationsachse des Gebläses (61) bewegt.

8. Batteriepack (1) nach Anspruch 6, wobei der Umwandlungsmechanismus (62) Folgendes umfasst:
einen Rotor (65), der so konfiguriert ist, dass er sich um eine Rotationsachse dreht, die senkrecht zur Rotationsachse des Gebläses (61) verläuft; und
einen Arm (66, 67), der so konfiguriert ist, dass er den Rotor (65) mit dem Abstreifer (50) verbindet.

9. Batteriepack (1) nach Anspruch 8, wobei der Umwandlungsmechanismus (62) ferner ein Getriebeteil (63, 64) umfasst, das so konfiguriert ist, dass es die Rotationskraft des Gebläses (61) in die Rotationskraft des Rotors (65) überträgt.

10. Batteriepack (1) nach Anspruch 8, wobei ein Ende des Arms (66) an einer exzentrischen Position in Bezug auf die Rotationsachse des Rotors (65) drehbar verbunden ist, und
das andere Ende des Arms (66) drehbar mit dem Abstreifer (50) verbunden ist.

11. Batteriepack (1) nach Anspruch 8, wobei ein erster Vorsprung (65a) von dem Rotor (65) an einer exzentrischen Position in Bezug auf die Rotationsachse des Rotors (65) vorsteht,
ein zweiter Vorsprung (51a) von dem Abstreifer (50) vorsteht, und
der Arm (67) Folgendes umfasst:
eine erste Führungsnut (67a), in die der erste Vorsprung (65a) eingesetzt ist und die sich in einer Längsrichtung des Arms (67) erstreckt; und
eine zweite Führungsnut (67b), in die der zweite Vorsprung (51a) eingesetzt ist und die sich in der Längsrichtung des Arms (67) erstreckt.

12. Batteriepack (1) nach Anspruch 8, wobei sich der Abstreifer (50) in einer Richtung bewegt, die sowohl zur Rotationsachse des Gebläses (61) als auch zur Rotationsachse des Rotors (65) senkrecht verläuft.

13. Batteriepack (1) nach Anspruch 1, ferner umfassend ein Führungsteil (70), das so konfiguriert ist, dass es die Bewegung des Abstreifers (50) führt.

14. Batteriepack (1) nach Anspruch 13, wobei der Abstreifer (50) Folgendes umfasst:
ein Verbindungsteil (51), das mit dem Antriebsteil (60) verbunden ist;
einen Hauptkörper (52), der mit einem Reinigungselement (52a) versehen ist, das in Richtung des Filters (40) vorsteht; und
ein Verlängerungsteil (53), das so konfiguriert ist, dass es das Verbindungsteil (51) mit dem Hauptkörper (52) verbindet, und sich parallel zur Bewegungsrichtung des Abstreifers (50) erstreckt, um mit dem Führungsteil (70) in Kontakt zu sein.

15. Batteriepack (1) nach Anspruch 13, wobei der Abstreifer (50) Folgendes umfasst:
ein Verbindungsteil (51), das mit dem Antriebsteil (60) verbunden ist und sich parallel zur Bewegungsrichtung des Abstreifers (50) erstreckt, um mit dem Führungsteil (70) in Kontakt zu sein; und
einen Hauptkörper (52), der mit dem Verbindungsteil (51) verbunden und mit einem Reinigungselement (52a) versehen ist, das in Richtung des Filters (40) vorsteht.

## Revendications

1. Bloc-batterie (1) comprenant :
un boîtier (10) ;
au moins un module de batterie (20) logé dans le boîtier (10) ;
une partie d'évent (30) ménagée dans le boîtier (10) pour évacuer un gaz généré dans le module de batterie (20) en raison d'un incendie ou d'un emballement thermique dans le module de batterie (20) ;
un filtre (40) disposé devant la partie d'évent (30) dans une direction d'écoulement du gaz ;
un racleur (50) configuré pour éliminer des substances étrangères accumulées sur le filtre (40) ; et
une partie d'entraînement (60) fonctionnant par l'écoulement du gaz pour déplacer le racleur (50) d'un mouvement de va-et-vient.

2. Bloc-batterie (1) selon la revendication 1, dans lequel la partie d'entraînement (60) est configurée pour permettre au racleur (50) de se déplacer dans une direction de longueur, une direction de largeur ou une direction de hauteur du bloc-batterie (1).

3. Bloc-batterie (1) selon la revendication 1, dans lequel un trou oblong (41) s'étendant parallèlement à la direction de déplacement du racleur (50) est défini dans le filtre (40), le trou oblong (41) étant long dans la direction de la longueur ou de la largeur du bloc-batterie (1).

4. Bloc-batterie (1) selon la revendication 1, comprenant en outre un passage d'évent (31) disposé à l'intérieur du boîtier (10) pour guider le gaz généré dans au moins un module de batterie (20) vers la partie d'évent (30).

5. Bloc-batterie (1) selon la revendication 4, dans lequel le boîtier (10) comprend :
un boîtier interne (11) configuré pour loger au moins un module de batterie (20) ; et
un boîtier externe (12) configuré pour entourer le boîtier interne (11) et pourvu de la partie d'évent (30),
dans lequel le passage d'évent (31) est disposé entre le boîtier interne (11) et le boîtier externe (12).

6. Bloc-batterie (1) selon la revendication 1, dans lequel la partie d'entraînement (60) comprend :
un ventilateur (61) configuré pour tourner par l'écoulement du gaz ; et
un mécanisme de conversion (62) configuré pour convertir une force de rotation du ventilateur (61) en une force de déplacement du racleur (50).

7. Bloc-batterie (1) selon la revendication 6, dans lequel le racleur (50) se déplace dans une direction parallèle à un axe de rotation du ventilateur (61).

8. Bloc-batterie (1) selon la revendication 6, dans lequel le mécanisme de conversion (62) comprend :
un rotor (65) configuré pour tourner autour d'un axe de rotation perpendiculaire à l'axe de rotation du ventilateur (61) ; et
un bras (66, 67) configuré pour relier le rotor (65) au racleur (50).

9. Bloc-batterie (1) selon la revendication 8, dans lequel le mécanisme de conversion (62) comprend en outre une partie d'engrenage (63, 64) configurée pour transmettre la force de rotation du ventilateur (61) en la force de rotation du rotor (65).

10. Bloc-batterie (1) selon la revendication 8, dans lequel une extrémité du bras (66) est reliée de manière rotative au niveau d'une position excentrique par rapport à l'axe de rotation du rotor (65), et
l'autre extrémité du bras (66) est reliée de manière rotative au racleur (50).

11. Bloc-batterie (1) selon la revendication 8, dans lequel une première saillie (65a) fait saillie depuis le rotor (65) au niveau d'une position excentrique par rapport à l'axe de rotation du rotor (65),
une seconde saillie (51a) fait saillie depuis le racleur (50), et
le bras (67) comprend :
une première rainure de guidage (67a) dans laquelle la première saillie (65a) est insérée et qui s'étend dans une direction longitudinale du bras (67) ; et
une seconde rainure de guidage (67b) dans laquelle la seconde saillie (51a) est insérée et qui s'étend dans la direction longitudinale du bras (67).

12. Bloc-batterie (1) selon la revendication 8, dans lequel le racleur (50) se déplace dans une direction perpendiculaire à chacun de l'axe de rotation du ventilateur (61) et de l'axe de rotation du rotor (65).

13. Bloc-batterie (1) selon la revendication 1, comprenant en outre une partie de guidage (70) configurée pour guider le déplacement du racleur (50).

14. Bloc-batterie (1) selon la revendication 13, dans lequel le racleur (50) comprend :
une partie de liaison (51) reliée à la partie d'entraînement (60) ;
un corps principal (52) pourvu d'un élément de nettoyage (52a) faisant saillie vers le filtre (40) ; et
une partie d'extension (53) configurée pour relier la partie de liaison (51) au corps principal (52) et s'étendant parallèlement à la direction de déplacement du racleur (50) de manière à être en contact avec la partie de guidage (70).

15. Bloc-batterie (1) selon la revendication 13, dans lequel le racleur (50) comprend :
une partie de liaison (51) reliée à la partie d'entraînement (60) et s'étendant parallèlement à la direction de déplacement du racleur (50) de manière à être en contact avec la partie de guidage (70) ; et
un corps principal (52) relié à la partie de liaison (51) et pourvu d'un élément de nettoyage (52a) faisant saillie vers le filtre (40).
